# EUROPEAN PATENT SPECIFICATION

(11) **EP 2 691 708 B1**
(45) Date of publication and mention of the grant of the patent: **27.02.2019**
(21) Application number: 12713880.8
(22) Date of filing: 29.03.2012
(51) Int. Cl.: F25D 3/12

(54) **DEVICE FOR PRODUCTION AND DISTRIBUTION OF CO2 ICE**
VORRICHTUNG ZUR HERSTELLUNG UND VERTEILUNG VON CO2-EIS
DISPOSITIF DE PRODUCTION ET DE DISTRIBUTION DE NEIGE CARBONIQUE

(30) Priority: 29.03.2011 NO 20110481
(43) Date of publication of application: 05.02.2014
(73) Proprietor: Trosterud Mekaniske Verksted AS, 0582 Oslo (NO)
(72) Inventor: JOHNSON, Gisle Espolin, N-1184 Oslo (NO)
(74) Representative: Protector IP AS
(86) International application number: PCT/EP2012/001380
(87) International publication number: WO 2012/130453

(56) References cited:
- DE-A1- 19 820 588
- FR-A1- 2 360 054
- US-A- 2 316 423
- US-A- 2 533 653

## Description

### Technical Field

The present invention relates to the field of generating of dry ice and, filling the produced dry ice into boxes or containers.

### Background Art

Dry ice is under atmospheric pressure directly converted from solid state, dry ice or dry ice snow, to CO2 gas at a temperature of - 78 °C. Dry ice and CO2 snow may therefore be used for rapid cooling of materials and to keep the materials cold for a certain period. This may be used in the food sector, where food articles are to be cooled rapidly during production and be kept cold during transportation. For transport with no or too low cooling capacity is available, the use of dry ice may be the only option to keep the articles of food cold during transport.

EP 1 208 295 relates to a method and device for cooling of products in an insulated transport container using a cooling module filled with dry ice. According to EP 1 208 295, the dry ice is granulated to give granules of a predetermined size distribution. Additionally, the dry ice is kept in separate modules and not in direct contact with the goods to be cooled.

US 7.761.888 relates to a method and apparatus for conveying a packaging material such as dry ice from a central source for pellets or granules to one or more dispensing stations. Surfaces in the device exposed to the packing material are covered by a low friction material.

Both EP 1 208 295 and US 7.761.888 relates to the use of pellets or granules of dry ice, where dry ice taken from some storage is granulated. Production of dry ice requires relative large production facility for production of solidified CO₂ that takes place under high pressure and low temperature. Additionally, dry ice sublimates at atmospheric pressure and requires highly insulated storage facilities for storage and transport to avoid losing the dry ice as CO₂ gas.

An alternative to producing dry ice at the facility for use thereof, or transporting the dry ice to the facility for use, and producing dry ice granulate, is local production of dry ice snow from pressurized CO₂. Due to the cooling effect by a sudden drop in pressure and the fact that CO₂ is only stable as gas or as a solid at atmospheric pressure, depressurization of pressurized CO₂ results in formation finely divided dry ice snow. Approximately 50% of the pressurized CO₂ is converted to dry ice snow, whereas the remaining portion escapes to the surroundings as gas. Transport of pressurized CO₂, on the other hand, is relatively simple and allows for producing CO₂ at one facility and production of CO₂ at a different facility. Additionally, the flexibility to produce dry ice snow according to the demand, and the relatively low investment cost for local production of dry ice snow, has made this an attractive option.

Pressurized CO₂ gas may in the simplest way of use be injected directly into the product during kneading of minced or ground meat products, causing a rapid cooling of the food product. This method may, however, only be used for minced or ground meat products, and not for products in the form of larger pieces of meat of fish, such as whole fish, cleaned fish or cut fish or different meat products.

Alternatively, dry ice snow may be manually distributed over the product to be cooled and kept cold. This method is i.a. used for cooling of fish to be transported by air. The fish is then cooled by means of dry ice snow in an amount calculated to cool the fish sufficiently, so that all or most of the dry ice is sublimed before the transport actually takes place. The dry ice snow is produced by releasing liquid CO₂ through one or more nozzles into a bell shaped dome. At atmospheric pressure the liquid CO₂ is immediately converted to CO₂ gas and dry ice snow.

The dome around the nozzles reduces the mixing of dry ice snow with the surrounding atmosphere. The gas phase escapes from the device, and the dry ice snow is collected below the dome and is distributed manually over the goods to be cooled. Boxes with food articles may, optionally, be transported under the domes as the dry ice snow is produced to get an automatic distribution of the ice snow on the goods.

A problem related to the above described method for production and distribution of dry ice snow, where the dry ice snow is distributed manually or is filled directly into boxes being transported under the domes for production of CO₂ snow, is that it is difficult to control the amount of dry ice snow that is put into each box, and that the dry ice snow is unevenly distributed at the top of the products, resulting in a varying amount of dry ice snow and thereby uneven cooling of the product. The result may be that parts of the products freezes and other parts are not cooled sufficiently to obtain the requested quality on the products.

A problem arising in trying to provide a simple and automatic device for producing and filling dry ice snow into boxes filled with fish or meat products is that dry ice snow becomes very sticky, almost like extremely sticky snow, a phenomenon that adds to the problem of even distribution of the dry ice snow. The dry ice snow both sticks to all surfaces, including low friction surfaces, and to the dry ice itself, which may add to the problem of varying dosages and uneven distribution of CO₂ snow, and may end in blocking the equipment for production and distribution thereof..

As mentioned above, generation of dry ice snow from liquid CO₂ generates great volumes of CO₂ gas. It is estimated that about 1 kg CO₂ gas is released for generation of 1 kg dry ice snow. This gas will displace the air in the production facilities and may make the facilities unsuitable to stay in for personnel unless the facility is thoroughly ventilated.

Accordingly, there is a need for a device for generation of CO₂ snow was the problem of CO₂ gas inside the facility is avoided.

Additionally, a manual process as described above is labour intensive, and there is a need for less labour intensive processes to reduce cost.

Accordingly, important requirements are to be fulfilled when filling CO₂ snow, or dry ice snow, onto products in a modern production facility for food articles:
1. Effective removal of CO₂ gas from the working space;
2. Large capacity for generation of CO₂ snow (amount per time unit),
3. Exactness of the dosage of CO₂ snow, and
4. Even distribution of CO₂ snow over the products.

An important object of the present invention is therefore to provide for a device for generation and distribution of CO₂ snow that makes it possible to fulfil the requirements mentioned above.

US2533653 discloses a method for production and distribution of dry ice snow according to the preamble of claim 1.

### Summary of invention

According to a first aspect, the present invention relates to a method for producing and distribution of dry ice snow into boxes with food articles for cooling of the food article, where dry ice snow is produced by releasing liquid pressurized CO2 through one or more nozzles, wherein the dry ice snow is produced inside a closed compartment having a controlled ventilation to remove generated CO2 gas, and where dry ice is distributed into boxes containing food articles to be cooled by opening of one or more doors at the bottom of said closed compartment at the same time as the boxes are passed under the closed compartment.

Enclosing the generation of CO₂ snow inside an enclosed compartment reduces the known problem working with dry ice snow, that the ventilation in the working space have to take care of large amounts of gas, to avoid too high concentration of CO₂ in the working space. High amounts of CO₂ in the air have toxic effects in addition to replacement of oxygen that may suffocate the people working in the area.

According to the invention, the doors at the bottom of the closed compartment are heated.

Dry ice snow is extremely sticky. The low temperature will also cause any humidity in the air to stick to the walls as rime. By heating of the doors, and especially the surface facing the dry ice snow collected inside the enclosure, result in a gas formation of a cushion preventing dry ice from sticking to the surface. Depending on the applied heat, formation of rime may also be prevented.

According to one embodiment, the walls of the closed compartment are heated. The advantages by heating of the walls corresponds the advantages by heating the doors.

According to one embodiment, gaseous CO₂ is withdrawn from the closed compartment to substantially reduce the release of CO₂ gas to the working space surrounding the closed compartment.

The generation of dry ice snow results in generation of a large volume of CO₂ gas. Withdrawal of the generated gas substantially reduces the emission of CO₂ gas into the surrounding working space.

According to a second aspect, the present invention relates to a device for producing and distribution of dry ice snow into boxes with food articles for cooling thereof, comprising a CO₂ line for supplying liquid pressurized CO₂ connected a nozzle tube for production of dry ice snow, arranged in a dome, wherein the dome is arranged inside an enclosed compartment comprising a main body, where doors are arranged at the bottom of the main body to allow emptying of dry ice snow collected at the bottom of the main body.

According to the invention, a CO2 ventilation pipe for withdrawal of CO₂ gas, is connected to the main body.

According to the invention, heating elements are arranged in the doors to heat the surface of the doors facing the dry ice snow collected inside the main body.

According to another embodiment, heating elements are arranged in the walls of the main body to heat the inside surface thereof.

According to still another embodiment, the main body has double walls between which hot air may be circulated for heating of the inner wall of the main body.

### Brief description of drawings

Fig. 1 is a length section through a device according to the present invention in a closed position, and
Fig. 2 is a length section through the device, in an open position.

### Detailed description of the invention

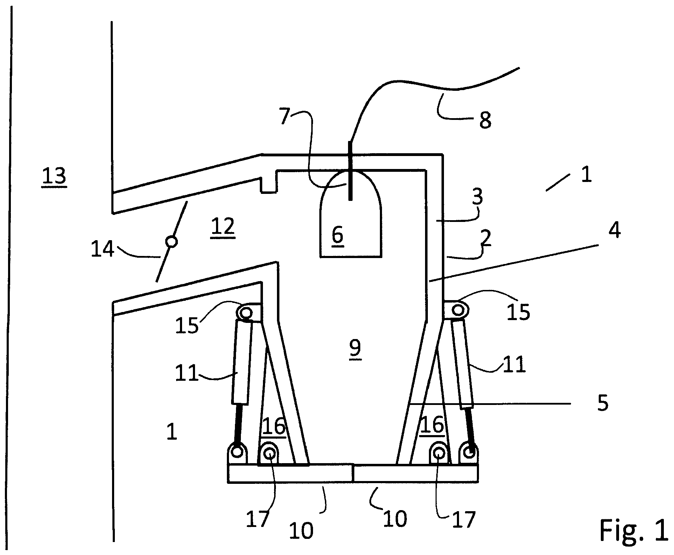

Figure 1 is a length section through a device 1 for production and distribution of dry ice snow according to the present invention. The device comprises a main body 2 being double walled having an air filled space between the walls of the main body.

Preferably, the main body, has a circular cross section due to the production cost and ease of construction thereof. The main body preferably comprises a tubular upper part 4, and a lower funnel shaped part 5 defining the inner room, or hollow 9, of the main body. At the lower, and open end of the main body, one or more doors 10 are arranged.

A nozzle tube 7 is arranged inside a dome 6 arranged inside and at the top of the main body. One or more nozzles is / are arranged on the nozzle tube inside the dome for connected for production of dry ice snow by introducing liquid pressurized CO₂ from a CO₂ line 8 into the main body through the nozzle(s) on the nozzle tube. During production of dry ice snow, liquid pressurized CO₂ is introduced through the CO₂ line to the nozzle tube and released through one or more nozzle(s) inside the dome 6.

A mixture of dry ice snow and gaseous CO₂ is produced inside the dome 6. The dome is open downwards and directs the dry ice snow and CO₂ gas into the hollow 9 of the main body. The dry ice snow is collected in the lower, funnel shaped part 5 of the main body where the dry ice snow is prevented from falling out by means of doors 10 closing the opening of the main body, downwards.

The CO₂ gas released into the hollow of the main body, is led out of the main body through a CO₂ vent 12 connected to a ventilation tube 13. To ensure that most of the generated dry ice snow is collected in the device as described above, and avoid that too much dry ice snow is drawn out of the main body together with the CO₂ gas, it is important to avoid to high velocity of the gas leaving the main body in the CO₂ vent 12. It is therefore important cross sections of the volumes where the gas is flowing are sufficient. It is also important that the suction from the ventilation tube 13 is regulated to avoid excessive suction. The gas flow out of the main body may be regulated by regulation of the suction in the ventilation tube 13 and / or by means of a control valve 14 in the CO₂ vent.

As mentioned above, the walls of the main body 2, and optionally the walls of the CO₂ vent 12, are double walls having an air filled space between the inner and outer wall. The dry ice snow is very sticky and has a tendency to stick both to itself, as sticky snow, and to all surfaces. The inner wall is therefor heated. The presently preferred mode of heating the inner wall is by means of hot air that is introduced into the air filled space and circulated therein. Heating of the surface will cause the dry ice snow in contact with the wall to sublime so that a gas cushion is formed between the wall and the dry ice snow. This gas cushion both substantially reduce the sticking and the friction between the surface and the dry ice snow, and creates an insulating layer between the surface and the dry ice snow to avoid excessive sublimation.

It may be advisable to arrange ribs between the outer and inner wall to ascertain an even flow of hot air in the air filled space to avoid formation of cold spots where sticking of dry ice snow to the surface may occur.

Alternatively, the main body may be heated by means of any other fluid circulating between the inner and outer wall, or by means of electrical heating.

As mentioned above, the bottom of the main body 2 is closed by one or more door(s) 10. The surface of the door(s) 10 facing inside into the hollow 9 of the main body, is (are) also heated of the reasons described for the main body above. Presently, however, electrical heating is most probably the heating of choice as the door(s) are to be moveably connected to the main body. It is far easier to construct and maintain an electrical coupling to doors that are to be operated, than using any fluid connections.

The illustrated device has two doors 10, both rotary connected to the main body 2 about an axle 17 connected to brackets 16 connected to the main body 2. The doors 10 may be rotated about the axle 17 from a closed position, illustrated in figure 1, where the doors close the opening at the lower end of the main body, and an open position where the doors are rotated away from the opening to allow the dry ice snow collected inside the hollow 9 of the main body to fall down onto goods that are allowed to pass under the opening. The doors are operated by means of actuators 11, or corresponding means for rotary displacement of doors, in a well known way. The actuators are connected to a door and to an actuator bracket 15 fastened to the main body 2.

The suction tube 13 may be arranged to remove excess gas from the main body only, or may be arranged both to remove gas from the main body and to continue to the floor below the device, for removal of escaped CO₂ gas from the volume close to the floor. CO₂ gas is heavier than air and the concentration of CO₂ will build up from the floor and upwards. Most of the escaped CO₂ may thus be collected by arranging an inlet for the suction tube close to the floor. Preferably, a low fence at the floor around the working area for the present device, e.g. a 60 cm. high fence, may cause the efficiency of collecting CO₂ to increase substantially.

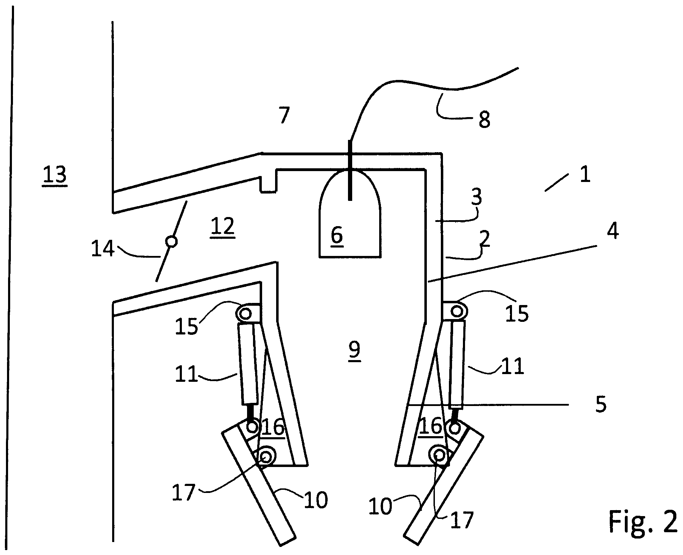

In operation, a transport device such as a conveyor belt, for transporting boxes filled with goods to be cooled, such as fish or other articles of food will be arranged under the present device as illustrated in figures 1 and 2. Not shown sensors, is preferably arranged in the path of the boxes to indicate for a controlling device that a box will arrive below the present device in e.g. 5 seconds. A valve controlling release of liquid CO₂ into the nozzle tube will then be activated for a predetermined time, e.g. 2 seconds, to produce a predetermined amount of dry ice snow. The produced dry ice snow will then be collected at the bottom of the main body to be dropped into the box when a second sensor indicates that the box is in position below the device.

As soon as the dry ice snow has been dropped into the box, the doors are again closed, and the device is ready for production of dry ice snow for a next box. To avoid extensive sublimation and corresponding variation in the amount of dry ice snow, the generation of dry ice snow is started on demand, as response to a first sensor indication that a box is entering. The device is therefor very flexible in capacity. The maximum capacity is dependent on the time needed to produce the required dry ice snow, and the time needed for emptying the device and closing the doors. Prototype tests indicate that a capacity of at least 10 boxes, such as e.g. 12 - 15 each minute is obtainable.

Optionally a grid of thin steel wires may be arranged between the opening of the device and the box to be filled. Test indicate that the produced dry ice snow sticking together for form a clod, will separate into a more powdery form if it is dropped onto a coarse grid of thin wires.

## Claims

1. A method for producing and distribution of dry ice snow into boxes with food articles for cooling of the food article, where dry ice snow is produced by releasing liquid pressurized CO₂ through one or more nozzles, where the dry ice snow is produced inside a closed compartment having a controlled ventilation to remove generated CO₂ gas, and where dry ice is distributed into boxes containing food articles to be cooled by opening of one or more doors at the bottom of said closed compartment at the same time as the boxes are passed under the closed compartment, said method being **characterized in that** the doors at the bottom of the closed compartment are heated.

2. The method of claim 1, wherein the walls of the closed compartment are heated.

3. The method of claim 1 or 2, wherein gaseous CO₂ is withdrawn from the closed compartment to substantially reduce the release of CO₂ gas to the working space surrounding the closed compartment.

4. A device for producing and distribution of dry ice snow into boxes with food articles for cooling thereof, comprising a CO₂ line (8) for supplying liquid pressurized CO₂ connected a nozzle tube (7) for production of dry ice snow, arranged in a dome (6), **characterised in that** the dome (6) is arranged inside an enclosed compartment comprising a main body (2), where doors (10) are arranged at the bottom of the main body to allow emptying of dry ice snow collected at the bottom of the main body (2), where a CO₂ ventilation pipe (12) for withdrawal of CO₂ gas, is connected to the main body (2), and where heating elements are arranged in the doors to heat the surface of the doors facing the dry ice snow collected inside the main body.

5. The device of claim 4, wherein heating elements are arranged in the walls of the main body to heat the inside surface thereof.

6. The device according to claim 4, wherein the main body has double walls between which hot air may be circulated for heating of the inner wall of the main body.

## Patentansprüche

1. Verfahren zur Herstellung und Verteilung von Trockeneisschnee in Kisten mit Lebensmittelartikeln zur Kühlung des Lebensmittels, wobei Trockeneisschnee durch Freisetzung von flüssigem druckbeaufschlagtem CO₂ durch eine oder mehrere Düsen erzeugt wird, wobei der Trockeneisschnee innerhalb eines geschlossenen Fachs mit einer gesteuerten Belüftung zum Entfernen von erzeugtem CO₂-Gas produziert wird, und wobei Trockeneis in Kisten verteilt wird, die Lebensmittel enthalten, die durch Öffnen einer oder mehrerer Türen am Boden des geschlossenen Fachs gleichzeitig mit dem Durchgang der Kartons unter das geschlossene Fach zu kühlen sind, **dadurch gekennzeichnet, dass** die Türen am Boden des geschlossenen Fachs erwärmt werden.

2. Verfahren nach Anspruch 1, wobei die Wände des geschlossenen Fachs erwärmt werden.

3. Verfahren nach Anspruch 1 oder 2, worin gasförmiges CO₂ aus dem geschlossenen Fach entnommen wird, um die Freisetzung von CO₂-Gas an den Arbeitsraum um das geschlossene Fach herum wesentlich zu reduzieren.

4. Vorrichtung zum Herstellen und Verteilen von Trockeneisschnee in Kisten mit Lebensmitteln, um diese zu kühlen, umfassend eine CO₂-Leitung (8) zum Zuführen von flüssigem druckbeaufschlagtem CO₂, die mit einem Düsenrohr (7) zum Erzeugen von Trockeneisschnee verbunden ist, das in einer Kuppel (6) angeordnet ist, **dadurch gekennzeichnet, dass** die Kuppel (6) in einem geschlossenen Fach angeordnet ist, das einen Hauptkörper (2) umfasst, wobei Türen (10) am Boden des Hauptkörpers angeordnet sind, um die Entleerung von am Boden des Hauptkörpers (2) gesammeltem Trockeneisschnee zu ermöglichen, wobei ein CO₂-Lüftungsrohr (12) zur Entnahme von CO₂-Gas mit dem Hauptkörper (2) verbunden ist, und wobei Heizelemente in den Türen angeordnet sind, um die Oberfläche der Türen zu erwärmen, die dem innerhalb des Hauptkörpers gesammelten Trockeneisschnee zugewandt sind.

5. Vorrichtung nach Anspruch 4, wobei Heizelemente in den Wänden des Hauptkörpers angeordnet sind, um dessen Innenfläche zu erwärmen.

6. Vorrichtung nach Anspruch 4, wobei der Hauptkörper Doppelwände aufweist, zwischen denen Heißluft zum Erwärmen der Innenwand des Hauptkörpers zirkuliert werden kann.

## Revendications

1. Méthode de production et de distribution de neige carbonique dans des boîtes contenant des produits alimentaires pour le refroidissement du produit alimentaire, dans laquelle de la neige carbonique est produite en libérant du CO₂ liquide sous pression à travers une ou plusieurs buses, où la neige carbonique est produite à l'intérieur d'un compartiment fermé ayant une ventilation commandée pour éliminer le CO₂ gazeux généré, et dans laquelle la neige carbonique est répartie dans des boîtes contenant des produits alimentaires devant être refroidis par l'ouverture d'une ou plusieurs portes situées au niveau de la partie inférieure dudit compartiment fermé en même temps que les boîtes passent sous le compartiment fermé, ladite méthode étant **caractérisée en ce que** les portes situées au niveau de la partie inférieure du compartiment fermé sont chauffées.

2. Méthode selon la revendication 1, dans laquelle les parois du compartiment fermé sont chauffées.

3. Méthode selon la revendication 1 ou 2, dans laquelle du CO₂ gazeux est retiré du compartiment fermé pour réduire sensiblement le rejet de CO₂ dans l'espace de travail entourant le compartiment fermé.

4. Dispositif de production et de distribution de neige carbonique dans des boîtes contenant des produits alimentaires pour un refroidissement de ceux-ci, comprenant une ligne de CO₂ (8) pour fournir du CO₂ liquide sous pression reliée à un tube de buse (7) pour la production de neige carbonique, agencé dans un dôme (6), **caractérisé en ce que** le dôme (6) est agencé à l'intérieur d'un compartiment fermé comprenant un corps principal (2), où des portes (10) sont agencées au niveau de la partie inférieure du corps principal pour permettre de vider la neige carbonique collectée au niveau de la partie inférieure du corps principal (2), où un tuyau de ventilation de CO₂ (12) pour l'extraction du CO₂ est raccordé au corps principal (2), et où des éléments chauffants sont agencés dans les portes pour chauffer la surface des portes faisant face à la neige carbonique collectée à l'intérieur du corps principal.

5. Dispositif selon la revendication 4, dans lequel des éléments chauffants sont disposés dans les parois du corps principal pour chauffer la surface intérieure de celles-ci.

6. Dispositif selon la revendication 4, dans lequel le corps principal a des doubles parois entre lesquelles de l'air chaud peut être mis en circulation pour chauffer la paroi intérieure du corps principal.
